# FASCICULE DE BREVET EUROPEEN

(11) **EP 3 410 449 B1**
(45) Date de publication et mention de la délivrance du brevet: **22.01.2020**
(21) Numéro de dépôt: 18174198.4
(22) Date de dépôt: 24.05.2018
(51) Int. Cl.: H01F 27/08, B81B 7/02, H01F 21/08

(54) **DISPOSITIF MAGNETIQUE INTEGRE A INDUCTANCE VARIABLE ET PROCEDE DE REALISATION D'UN TEL DISPOSITIF**
INTEGRIERTE MAGNETISCHE VORRICHTUNG MIT VARIABLER INDUKTION, UND HERSTELLUNGSVERFAHREN EINER SOLCHEN VORRICHTUNG
INTEGRATED MAGNETIC DEVICE WITH VARIABLE INDUCTANCE AND METHOD FOR PRODUCING SUCH A DEVICE

(30) Priorité: 29.05.2017 FR 1754698
(43) Date de publication de la demande: 05.12.2018
(73) Titulaire: Commissariat à l'énergie atomique et aux énergies alternatives, 75015 Paris (FR)
(72) Inventeur: VIALA, Bernard, 38360 SASSENAGE (FR); ACHARD, Hervé, 38000 GRENOBLE (FR)
(74) Mandataire: Brevalex

(56) Documents cités:
- EP-A1- 2 323 142
- FR-A1- 2 905 793
- JP-A- 2007 142 157
- US-A1- 2014 253 272

## Description

### DOMAINE TECHNIQUE ET ART ANTÉRIEUR

L'invention concerne le domaine des dispositifs magnétiques intégrés à inductance variable, correspondant avantageusement à un composant RF (radiofréquence) à inductance variable combinant un élément piézoélectrique à un ou plusieurs éléments magnétiques ainsi qu'à des éléments électriquement conducteurs disposés de part et d'autre de l'élément piézoélectrique, ainsi qu'un procédé de réalisation d'un tel dispositif.

Dans le domaine RF, et notamment celui de la téléphonie mobile, les composants RF variables sont de plus en plus recherchés afin réduire le nombre de circuits présents dans les téléphones portables. La cinquième génération de standards pour la téléphonique mobile, appelée 5G, prévoit la concomitance de plus de dix standards au sein d'un seul dispositif qui ne peut comporter autant d'antennes et de circuits d'émission/réception. La solution la plus plébiscitée est d'augmenter les possibilités d'adaptation des circuits électroniques utilisés, qui ne reposent actuellement en pratique que sur l'utilisation de capacités variables. Or, les résultats obtenus en n'utilisant que des capacités variables sont insuffisants et il devient nécessaire de proposer des inductances variables ayant un facteur de qualité suffisamment important, une consommation peu élevée, de faibles dimensions et une bonne fiabilité.

Dans le document FR 2 905 793, il est décrit la réalisation d'un dispositif magnétique intégré sur un substrat et à inductance variable comprenant une poutre formée d'un matériau piézoélectrique et sur laquelle est disposé un élément magnétique. En faisant varier la tension appliquée sur le matériau piézoélectrique, la poutre est soumise à des déformations en traction ou en compression qui mettent l'élément magnétique sous contraintes. Les contraintes appliquées sur l'élément magnétique engendrent des modifications de la valeur de sa perméabilité et de l'inductance formée par ce dispositif. Le procédé de réalisation décrit dans ce document est dit « monolithique », c'est-à-dire que toutes les couches sont empilées et gravées successivement sur un seul substrat.

Avec un tel procédé de réalisation, il est difficile de réaliser des éléments électriquement conducteurs de part et d'autre de la poutre de matériau piézoélectrique, pour former par exemple un bobinage, ou solénoïde, autour de cette poutre, et obtenir une structure sensiblement symétrique de chaque côté de la poutre. Cela limite la variation d'inductance atteignable. En outre, la libération de la poutre mise en œuvre à la fin de procédé nécessite la réalisation de trous de libération à travers la poutre de matériau piézoélectrique, ce qui diminue sa raideur et impose des contraintes sur les caractéristiques géométriques de cette poutre. Un autre inconvénient est lié aux températures élevées imposées par le dépôt du matériau piézoélectrique (qui correspond à du PZT) et qui, dans le procédé de réalisation décrit dans ce document, rendent ce procédé incompatible avec la présence d'un élément magnétique sous la poutre. La structure obtenue avec un tel procédé est donc asymétrique compte tenu de la présence d'un élément magnétique d'un seul côté de la poutre. Enfin, ces températures sont un frein à la présence de matériaux conducteurs sous la poutre.

En outre, le procédé de réalisation décrit dans le ce document ne permet pas de réaliser les éléments électriquement conducteurs de manière espacée vis-à-vis de l'élément piézoélectrique. Les documents US 2014/0253272, JP2007142157 et EP 2 323 142 divulguent des exemples de dispositifs magnétiques à inductance variable ainsi que leurs procédés de fabrication.

### EXPOSÉ DE L'INVENTION

Un but de la présente invention est de proposer un procédé de réalisation d'un dispositif magnétique intégré à réponse variable, utilisant l'effet magnétostrictif, ne présentant pas au moins une partie des inconvénients mentionnés précédemment, et permettant notamment la réalisation d'un dispositif magnétique comportant des éléments électriquement conducteurs disposés de part et d'autre de l'élément piézoélectrique, ne nécessitant pas la réalisation de trous de libération à travers l'élément piézoélectrique du dispositif, et permettant la réalisation d'un dispositif comportant un élément magnétique sur un ou deux côtés opposés de l'élément piézoélectrique.

Pour cela, la présente invention propose un procédé de réalisation d'un dispositif magnétique intégré à inductance variable, comportant au moins la mise en œuvre des étapes suivantes :
a) réalisation d'un élément piézoélectrique sur un premier substrat telle qu'une deuxième face de l'élément piézoélectrique soit disposée du côté du premier substrat ;
b) réalisation d'un premier élément électriquement conducteur du côté d'une première face, opposée à la deuxième face, de l'élément piézoélectrique, et solidarisation d'extrémités de l'élément piézoélectrique à un deuxième substrat telle que la première face de l'élément piézoélectrique soit disposée en regard d'une première cavité formée entre une partie du deuxième substrat et l'élément piézoélectrique, le premier élément électriquement conducteur étant disposé dans et/ou contre le deuxième substrat, ou contre l'élément piézoélectrique ;
c) suppression d'au moins une partie du premier substrat ;
d) réalisation d'un deuxième élément électriquement conducteur du côté de la deuxième face de l'élément piézoélectrique ;
et comportant en outre la réalisation d'un couplage électrique et/ou magnétique des premier et deuxième éléments électriquement conducteurs, et la réalisation d'au moins un élément magnétique disposé contre et/ou dans l'élément piézoélectrique et entre les premier et deuxième éléments électriquement conducteurs.

Grâce à l'utilisation des premier et deuxième substrats pour retourner l'élément piézoélectrique au cours du procédé, les première et deuxième faces opposées de l'élément piézoélectrique sont accessibles au cours de la réalisation du dispositif, ce qui permet la réalisation des premier et deuxième éléments électriquement conducteurs de chaque côté de l'élément piézoélectrique. La valeur de l'inductance obtenue avec un tel dispositif est donc plus importante que lorsqu'un seul élément électriquement conducteur est présent du côté d'une seule face de l'élément piézoélectrique couplé au noyau magnétique du dispositif.

Cela rend également possible l'intégration d'un élément magnétique éventuellement de chaque côté de l'élément piézoélectrique, et donc la réalisation d'une structure à inductance variable symétrique comportant l'élément piézoélectrique avec de chaque côté un élément magnétique et un élément électriquement conducteur. Le dispositif ainsi obtenu permet d'avoir une plus grande variation d'inductance que dans le cas d'une structure non symétrique ne comportant pas les mêmes éléments de chaque côté de l'élément piézoélectrique.

Dans ce procédé, les températures élevées imposées par le dépôt du matériau piézoélectrique ne sont pas problématiques puisque les éléments électriquement conducteurs et le ou les éléments magnétiques sont réalisés après la réalisation de l'élément piézoélectrique et ne sont donc pas impactés par ces températures de dépôt.

Le transfert de l'élément piézoélectrique du premier substrat sur le deuxième substrat avec la présence de la première cavité déjà présente lorsque l'élément piézoélectrique est solidarisé au deuxième substrat permet en outre d'éviter la réalisation de trous de libération à travers l'élément piézoélectrique. La raideur de l'élément piézoélectrique n'est donc pas réduite à cause de tels trous de libération. Cette absence de trous de libération à travers l'élément piézoélectrique permet également d'éviter une concentration des contraintes résiduelles entre les trous de libération qui peut occasionner des modifications locales de la direction initiale de l'aimantation du ou des éléments magnétiques, et donc une baisse de la perméabilité de ce ou ces éléments magnétiques.

De plus, la surface des première et deuxième faces de l'élément piézoélectrique n'est pas réduite par la présence de ces trous, ce qui augmente la surface d'accueil pour le ou les éléments magnétiques lorsque ce ou ces éléments magnétiques sont réalisés contre l'élément piézoélectrique.

La présence de la première cavité sous l'élément piézoélectrique permet à l'élément piézoélectrique de se déformer et ainsi, en fonction de la valeur de la tension à laquelle est soumis l'élément piézoélectrique, d'engendrer une contrainte dans l'élément magnétique. L'élément magnétique, qui forme le noyau magnétique du dispositif, est apte à se déformer sous la sollicitation de l'élément piézoélectrique. La perméabilité magnétique de l'élément magnétique varie donc en fonction des contraintes mécaniques qui lui sont appliquées par l'élément piézoélectrique.

Contrairement à un substrat piézoélectrique massif, l'utilisation de l'élément piézoélectrique suspendu permet de créer une contrainte à partir d'une faible tension d'actionnement (par exemple jusqu'à environ 20 V) appliquée aux bornes de l'élément piézoélectrique.

L'élément piézoélectrique peut être choisi tel que la contrainte mécanique générée par cet élément soit uniaxiale, c'est-à-dire orientée selon un seul axe, ce qui permet de bien maîtriser les variations d'inductance du dispositif car les variations de la perméabilité de l'élément magnétique sont dans ce cas bien maîtrisées. Un tel élément piézoélectrique comporte par exemple à du PZT qui est en outre compatible avec un dépôt en couche mince. D'autres matériaux peuvent être utilisés pour réaliser l'élément piézoélectrique, comme par exemple l'AIN, le PMN-PT, le ZnO, le LiNbO₃.

Le dispositif magnétique est qualifié de dispositif « intégré » car il est réalisé au moyen de couches minces déposées sur au moins un substrat, c'est-à-dire est réalisé intégralement ou en partie par des techniques de fabrication intégrées ou hybrides issues de la microélectronique.

L'expression « disposé contre », ou « réalisé contre », utilisée dans ce document doit être comprise comme pouvant correspondre à un contact direct entre les deux éléments disposés l'un contre l'autre, ou comme pouvant correspondre à un contact indirect entre ces éléments, c'est-à-dire avec un ou plusieurs autres matériaux intermédiaires entre ces éléments comme par exemple un isolant électrique entre l'élément électrique et l'élément conducteur.

Le terme « magnétique » est utilisé dans ce document pour désigner un élément ou un matériau ayant des propriétés ferromagnétiques ou antiferromagnétiques.

Selon un premier mode de réalisation, le procédé peut être tel que :
- lors de l'étape b), le premier élément électriquement conducteur est réalisé au moins en partie contre la première face de l'élément piézoélectrique, puis le deuxième substrat est solidarisé aux extrémités de l'élément piézoélectrique tel que le premier élément électriquement conducteur soit disposé dans la première cavité ;
- lors de l'étape d), le deuxième élément électriquement conducteur est réalisé au moins en partie contre la deuxième face de l'élément piézoélectrique.

Ce premier mode de réalisation permet d'éviter la réalisation de reprises de contact électrique entre différents substrats car les éléments électriquement conducteurs sont réalisés sur l'élément piézoélectrique. La ou les liaisons électriques et/ou magnétiques entre les premier et deuxième éléments électriquement conducteurs peuvent être réalisés à travers et/ou à côté des éléments piézoélectrique et magnétique.

Dans ce cas, la solidarisation des extrémités de l'élément piézoélectrique au deuxième substrat peut être mise en œuvre à une température inférieure à environ 300°C et par l'intermédiaire d'un élément de collage comportant au moins un polymère. Dans ce cas, le procédé ne requiert pas la mise en œuvre d'un scellement conducteur, ce qui permet de réduire le budget thermique de collage et de ne pas restreindre le choix du matériau magnétique utilisé à un matériau nécessairement compatible avec des températures élevées. Un tel collage par un élément de collage comportant un polymère n'induit quasiment pas de contrainte de collage d'origine thermique, ce qui est très avantageux. De plus, compte tenu des faibles températures mises en jeu lors du collage, les problèmes de dilatation thermique sont également supprimés.

L'élément de collage peut former des parois latérales de la première cavité. L'élément de collage peut dans ce cas former un espaceur ayant une épaisseur correspondant au moins à la hauteur de la première cavité. Cela évite de devoir réaliser la première cavité au sein du deuxième substrat.

En variante, il est possible que la première cavité soit formée directement par gravure dans le deuxième substrat. Dans ce cas, des portions du deuxième substrat forment alors la quasi-totalité des parois latérales de la première cavité.

Selon un deuxième mode de réalisation, le procédé peut être tel que :
- lors de l'étape b), le premier élément électriquement conducteur est réalisé dans et/ou contre le deuxième substrat, puis le deuxième substrat est solidarisé aux extrémités de l'élément piézoélectrique tel que la première face de l'élément piézoélectrique soit disposée en regard du premier élément électriquement conducteur et espacée du premier élément électriquement conducteur par la première cavité ;
- lors de l'étape d), le deuxième élément électriquement conducteur est réalisé dans et/ou contre un troisième substrat, puis le troisième substrat est solidarisé aux extrémités de l'élément piézoélectrique tel que la deuxième face de l'élément piézoélectrique soit disposée en regard du deuxième élément électriquement conducteur et espacée du deuxième élément électriquement conducteur par une deuxième cavité formée entre l'élément piézoélectrique et le troisième substrat.

Dans ce deuxième mode de réalisation, les premier et deuxième éléments électriquement conducteurs sont espacés de l'élément piézoélectrique, ce qui augmente la variation possible de l'inductance en raison des dimensions plus importantes avec lesquelles les premier et deuxième éléments électriquement conducteurs peuvent être réalisés. De plus, du fait que l'élément piézoélectrique peut se déformer de manière plus importante en raison de l'absence de contact de l'élément piézoélectrique avec les éléments électriquement conducteurs, la contrainte générée dans l'élément magnétique du dispositif est donc plus importante.

Dans ce cas, les premier et deuxième éléments électriquement conducteurs peuvent être reliés électriquement l'un à l'autre par l'intermédiaire de portions électriquement conductrices réalisées dans les premier, deuxième et troisième substrats et reliées électriquement entre elles lors de la mise en œuvre des étapes b) et d).

De plus, les solidarisations des extrémités de l'élément piézoélectrique aux deuxième et troisième substrats peuvent être mises en œuvre à une température inférieure à environ 400°C par thermocompression ou scellement eutectique ou collage direct ou collage anodique. Des moyens de scellement électriquement conducteurs sont dans ce cas utilisés pour établir la connexion électrique entre les premier et deuxième éléments électriquement conducteurs qui sont espacés de l'élément piézoélectrique.

De manière générale, la réalisation du au moins un élément magnétique peut comporter, entre les étapes a) et b), la réalisation d'au moins un premier élément magnétique contre la première face de l'élément piézoélectrique, et :
- lorsque le premier élément électriquement conducteur est réalisé contre la première face de l'élément piézoélectrique, le premier élément électriquement conducteur peut être disposé contre le premier élément magnétique tel que le premier élément magnétique soit disposé entre le premier élément électriquement conducteur et l'élément piézoélectrique, ou
- lorsque le premier élément électriquement conducteur est réalisé dans et/ou contre le deuxième substrat, la première cavité peut être disposée entre le premier élément magnétique et le premier élément électriquement conducteur.

En outre, la réalisation du au moins un élément magnétique peut comporter, entre les étapes c) et d), la réalisation d'au moins un deuxième élément magnétique contre la deuxième face de l'élément piézoélectrique, et :
- lorsque le deuxième élément électriquement conducteur est réalisé contre la deuxième face de l'élément piézoélectrique, le deuxième élément électriquement conducteur peut être disposé contre le deuxième élément magnétique tel que le deuxième élément magnétique soit disposé entre le deuxième élément électriquement conducteur et l'élément piézoélectrique, ou
- lorsque le deuxième élément électriquement conducteur est réalisé dans et/ou contre le troisième substrat, la deuxième cavité est disposée entre le deuxième élément magnétique et le deuxième élément électriquement conducteur.

En présence des deux éléments magnétiques de chaque côté de l'élément piézoélectrique, le volume du noyau magnétique du dispositif est doublé par rapport à un dispositif ne comportant qu'un seul élément magnétique se trouvant d'un côté de l'élément piézoélectrique, augmentant ainsi les performances de l'inductance.

Le procédé peut comporter en outre, entre les étapes c) et d), la réalisation d'au moins un via électriquement conducteur tel qu'à l'issue de l'étape d), les premier et deuxième éléments électriquement conducteurs soient reliés électriquement l'un à l'autre, par ledit au moins un via électriquement conducteur, en série ou en parallèle ou tels que les premier et deuxième éléments électriquement conducteurs forment au moins un solénoïde.

Le ou les vias électriquement conducteurs peuvent être réalisés à travers l'élément piézoélectrique. La présence de ce ou ces vias traversant l'élément piézoélectrique n'est pas gênante, contrairement aux trous de libération, car ils contribuent à rigidifier l'élément piézoélectrique et participent peu aux déformations résiduelles.

La réalisation du au moins un élément magnétique peut comporter, entre les étapes c) et d), la réalisation d'au moins une portion de matériau magnétique, ou via magnétique, telle qu'à l'issue de l'étape d), les premier et deuxième éléments électriquement conducteurs soient couplés magnétiquement l'un à l'autre par ladite au moins une portion de matériau magnétique. Cette ou ces portions de matériau magnétique forment un ou plusieurs vias magnétiques qui sont soumis à la contrainte générée dans l'élément piézoélectrique et voient donc leur perméabilité changer. La présence de ce ou ces vias magnétiques est compatible avec celle du premier et/ou du deuxième élément magnétique disposé contre l'élément piézoélectrique, le dispositif pouvant donc comporter ce ou ces vias magnétiques ainsi que le premier et/ou le deuxième élément magnétique.

En reliant magnétiquement, et non électriquement, les premier et deuxième éléments électriquement conducteurs entre eux, la longueur totale de l'élément électriquement conducteur formé autour de l'élément piézoélectrique et du noyau magnétique est réduite (longueur des liaisons électriques en moins), ce qui engendre une plus petite résistance série de l'inductance.

L'invention concerne également un dispositif magnétique intégré à inductance variable, comportant au moins :
- un substrat ;
- un élément piézoélectrique comportant des première et deuxième faces opposées, dont des extrémités sont solidarisées au substrat et dont la première face est disposée du côté du substrat ;
- une première cavité disposée entre une partie du substrat et l'élément piézoélectrique ;
- un premier élément électriquement conducteur disposé du côté de la première face de l'élément piézoélectrique, et un deuxième élément électriquement conducteur disposé du côté de la deuxième face de l'élément piézoélectrique, les premier et deuxième éléments électriquement conducteurs étant couplés électriquement et/ou magnétiquement l'un à l'autre ;
- un premier élément magnétique disposé contre la première face de l'élément piézoélectrique et entre l'élément piézoélectrique et le premier élément électriquement conducteur, et un deuxième élément magnétique disposé contre la deuxième face de l'élément piézoélectrique et entre l'élément piézoélectrique et le deuxième élément électriquement conducteur.

Le premier et/ou le deuxième élément électriquement conducteur peut comporter une piste électriquement conductrice en forme de méandres.

Selon le premier mode de réalisation, le premier élément électriquement conducteur peut être disposé au moins en partie contre la première face de l'élément piézoélectrique et dans la première cavité, et le deuxième élément électriquement conducteur peut être disposé au moins en partie contre la deuxième face de l'élément piézoélectrique.

Selon le deuxième mode de réalisation, le premier élément électriquement conducteur peut être disposé dans et/ou contre le substrat tel que la première face de l'élément piézoélectrique soit disposée en regard du premier élément électriquement conducteur et espacée du premier élément électriquement conducteur par la première cavité, et le deuxième élément électriquement conducteur peut être disposé dans et/ou contre un autre substrat tel que la deuxième face de l'élément piézoélectrique soit disposée en regard du deuxième élément électriquement conducteur et espacée du deuxième élément électriquement conducteur par une deuxième cavité formée entre l'élément piézoélectrique et une partie dudit autre substrat.

Chacun des premier et deuxième éléments magnétiques peut comporter un empilement d'au moins une portion de matériau ferromagnétique et d'au moins une portion de matériau antiferromagnétique. Les éléments magnétiques sont dans ce cas formés de multicouches comprenant une alternance de couches ferromagnétiques à forte magnétostriction et antiferromagnétiques, et qui présentent un comportement particulier à haute fréquence avec l'application d'une contrainte mécanique. De tels éléments magnétiques sont compatibles avec un scellement métallique mis en œuvre à une température pouvant atteindre 400°C. De tels éléments magnétiques sont avantageusement utilisés dans le deuxième mode de réalisation. L'empilement peut comporter également une ou plusieurs portions de matériau diélectrique pour permettre des laminations pour les hautes fréquences.

Le dispositif peut comporter en outre au moins un via électriquement conducteur reliant électriquement les premier et deuxième éléments électriquement conducteurs l'un à l'autre en série ou en parallèle ou tels que les premier et deuxième éléments électriquement conducteurs forment au moins un solénoïde, et/ou au moins une portion de matériau magnétique traversant l'élément piézoélectrique et couplant magnétiquement les premier et deuxième éléments électriquement conducteurs l'un à l'autre.

Le dispositif peut correspondre à une inductance variable, un élément de ligne de transmission adaptable, un résonateur accordable, un déphaseur ajustable, un coupleur commandable, un transformateur variable, etc.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
- la figure 1 représente schématiquement un dispositif magnétique intégré à inductance variable, objet de la présente invention, selon un premier mode de réalisation ;
- la figure 2 représente un exemple de réalisation d'un élément électriquement conducteur d'un dispositif magnétique intégré à inductance variable, objet de la présente invention ;
- les figures 3 à 6 représentent plusieurs exemples de réalisation de couplage électrique ou magnétique entre les éléments électriquement conducteurs d'un dispositif magnétique intégré à inductance variable, objet de la présente invention, selon le premier mode de réalisation ;
- les figures 7A à 7C représentent les étapes d'un procédé de réalisation d'un dispositif magnétique intégré à inductance variable, objet de la présente invention, selon le premier mode de réalisation ;
- la figure 8 représente schématiquement un dispositif magnétique intégré à inductance variable, objet de la présente invention, selon un deuxième mode de réalisation ;
- les 9A à 9D représentent les étapes d'un procédé de réalisation d'un dispositif magnétique intégré à inductance variable, objet de la présente invention, selon le deuxième mode de réalisation.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### EXPOSÉ DÉTAILLÉ DE MODES DE RÉALISATION PARTICULIERS

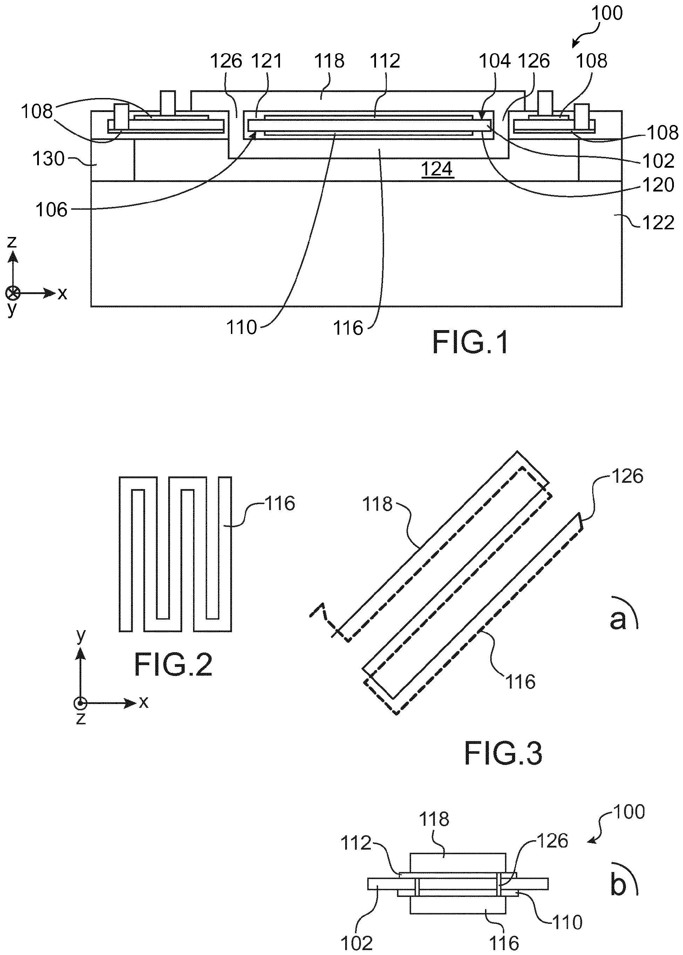

On se réfère tout d'abord à la figure 1 qui représente un dispositif magnétique 100 intégré et à inductance variable selon un premier mode de réalisation.

Le dispositif 100 comporte un élément piézoélectrique 102 formant un élément central du dispositif 100. L'élément piézoélectrique 102 comporte avantageusement du PZT. D'autres matériaux piézoélectriques (sans plomb) sont toutefois envisageables pour former l'élément 102, comme par exemple de l'AIN, les matériaux de la famille des niobates (LiNbO₃, NaKNbO₃), ceux de la famille des titanates (BaTiO₃, SrTiO₃), le PMN-PT, le ZnO ou encore une combinaison de tels matériaux.

L'élément piézoélectrique 102 est ici réalisé sous la forme d'une poutre, c'est-à-dire comporte une forme allongée dont la plus grande dimension s'étend dans le plan (X,Y), et parallèlement à l'axe X sur l'exemple représenté sur la figure 1. Cette poutre a par exemple une forme d'éprouvette de traction s'étendant parallèlement à l'axe X (c'est-à-dire comportant sa plus grande dimension parallèle à l'axe X), et comporte donc deux extrémités de largeur (dimension selon l'axe Y) plus importante que celle du reste de la poutre, c'est-à-dire plus importante que celle d'une partie centrale de la poutre. Le facteur de forme de cette poutre, c'est-à-dire le rapport entre la longueur et la largeur, peut être supérieur à 2, et avantageusement supérieur ou égal à 4. La longueur de la poutre, c'est-à-dire sa plus grande dimension (parallèle à l'axe X sur la figure 1) est par exemple comprise entre environ 100 µm et 500 µm.

L'épaisseur de l'élément piézoélectrique 102 est par exemple égale à environ 400 nm, ou plus généralement comprise entre environ 100 nm et 5 µm.

L'élément piézoélectrique 102 comporte une première face principale 106 et une deuxième face principale 104 opposée à la première face 106. Ces deux faces 104, 106 sont ici parallèles au plan (X,Y).

Le dispositif 100 comporte également des électrodes d'actionnement 108 disposées contre les extrémités de la poutre formée par l'élément piézoélectrique 102, sur les première et deuxième faces principales 106, 104. Une tension d'actionnement est destinée à être appliquée sur ces électrodes d'actionnement 108 afin que des déformations en compression ou en traction (suivant que la tension appliquée entre les électrodes 108 soit positive ou négative), majoritairement uniaxiales et sensiblement parallèles à l'axe X, soient générées dans l'élément piézoélectrique 102. Ces déformations sont destinées à mettre sous contrainte le ou les éléments magnétiques (décrits plus loin). La déformation générée est ici uniaxiale en raison de la nature du matériau piézoélectrique utilisé et de la forme en éprouvette de traction de l'élément piézoélectrique 102. Ces électrodes 108 comportent par exemple du platine, du molybdène, ou bien de l'oxyde d'iridium ou de strontium.

Un premier élément magnétique 110 est disposé contre la première face 106 de l'élément piézoélectrique 102. Un deuxième élément magnétique 112 est disposé contre la deuxième face 104 de l'élément piézoélectrique 102. Les éléments magnétiques 110, 112 comportent avantageusement des caractéristiques géométriques similaires (épaisseurs, dimensions latérales) afin de ne pas créer d'asymétrie autour de l'élément piézoélectrique 102. Dans le premier mode de réalisation décrit ici, les éléments magnétiques 110, 112 comportent avantageusement un même matériau magnétique, par exemple du FeCoB. D'autres matériaux magnétiques peuvent toutefois être utilisés pour former les éléments magnétiques 110, 112, comme par exemple du FeGaB ou bien un matériau de la famille des FeTaN, FeHfN, FeZrN. Le matériau magnétique comporte de préférence un alliage comprenant du fer ou du fer-cobalt. L'épaisseur de chacun des éléments magnétiques 110, 112 est par exemple égale à environ 200 nm, ou plus généralement comprise entre environ 50 nm et 5 µm.

Sur la figure 1, les éléments magnétiques 110, 112 recouvrent chacune une partie seulement d'une des faces principales 104, 106 de l'élément piézoélectrique 102. Il est toutefois possible que les éléments magnétiques 110, 112 recouvrent la totalité ou une majeure partie de la surface des faces principales 104, 106 qui n'est pas recouverte par les électrodes 108. En outre, plusieurs éléments magnétiques distincts peuvent être disposés sur une ou chacune des faces principales 104, 106 de l'élément piézoélectrique 102, par exemple sous la forme de barreaux.

Le dispositif 100 comporte en outre un premier élément électriquement conducteur 116 disposé contre la première face 106 de l'élément piézoélectrique 102, et un deuxième élément électriquement conducteur 118 disposé contre la deuxième face 104 de l'élément piézoélectrique 102. Les éléments électriquement conducteurs 116, 118 forment ensemble un bobinage disposé autour du noyau magnétique du dispositif 100 qui est formé par les éléments magnétiques 110, 112, destiné à emmagasiner l'énergie électrique du dispositif 100. Chacun des éléments électriquement conducteurs 116, 118 correspond, dans ce premier mode de réalisation, à une piste conductrice s'étendant dans un plan sensiblement parallèle aux faces principales 104, 106 de l'élément piézoélectrique 102, et en forme de méandres. La figure 2 représente schématiquement une vue de dessus d'un des éléments électriquement conducteurs, par exemple le premier élément électriquement conducteur 116, comportant une telle forme en méandres. De manière avantageuse, les deux éléments électriquement conducteurs 116, 118 comportent une forme et des dimensions sensiblement similaires afin de ne pas créer d'asymétrie autour de l'élément piézoélectrique 102. La largeur des brins de chacun des éléments électriquement conducteurs 116, 118 est par exemple égale à environ 20 µm, ou comprise entre environ 5 µm et 50 µm, et l'espacement entre deux brins voisins est par exemple égal à environ 10 µm, ou compris entre environ 5 µm et 50 µm. L'épaisseur de chacun des éléments électriquement conducteurs 116, 118 est par exemple égale à environ 1 µm, ou plus généralement comprise entre environ 0,5 µm et 5 µm.

Le premier élément électriquement conducteur 116 est isolé électriquement du premier élément magnétique 110 et de l'élément piézoélectrique 102 par une couche diélectrique 120 qui recouvre le premier élément magnétique 110, l'élément piézoélectrique 102 et les électrodes 108 du côté de la première face 106 de l'élément piézoélectrique 102. Des ouvertures sont formées à travers la couche diélectrique 120, formant des accès aux électrodes 108 se trouvant du côté de la première face 106 de l'élément piézoélectrique 102. Une autre couche diélectrique 121, par exemple similaire à la couche diélectrique 120, recouvre le deuxième élément magnétique 112, l'élément piézoélectrique 102 et les électrodes 108 du côté de la deuxième face 104 de l'élément piézoélectrique 102. Cette autre couche diélectrique 121 assure une fonction d'isolation électrique similaire à celle de la couche diélectrique 120, c'est-à-dire sert à isoler électriquement le deuxième élément électriquement conducteur 118 vis-à-vis de l'élément piézoélectrique 102 et du deuxième élément magnétique 112.

Les éléments électriquement conducteurs 116, 118 disposés autour du noyau magnétique formé par les éléments magnétiques 110, 112 permettent, lorsqu'ils sont traversés par un courant électrique, de créer un champ magnétique autour de ce noyau magnétique, avec une valeur d'inductance variant en fonction de la contrainte appliquée par l'élément piézoélectrique 102 sur les éléments magnétiques 110, 112, la valeur de cette contrainte dépendant de la tension appliquée sur les électrodes 108.

Les éléments électriquement conducteurs 116, 118 comportent par exemple du cuivre et/ou de l'aluminium et/ou de préférence de l'or qui a un faible module d'Young permettant de raidir le moins possible l'élément piézoélectrique 102. Ils ont par exemple une épaisseur comprise entre environ 0,5 µm et 5 µm.

Les extrémités de la poutre correspondant à l'élément piézoélectrique 102 sont solidarisées, du côté de la première face 106 de l'élément piézoélectrique 102, à un substrat 122. Le substrat 122 est par exemple un substrat de silicium. Une cavité 124 est disposée entre le substrat 122 et l'élément piézoélectrique 102, dans laquelle sont disposés les éléments se trouvant sur la première face 106 de l'élément piézoélectrique 102, c'est-à-dire le premier élément magnétique 110 et le premier élément électriquement conducteur 116. Cette cavité 124 assure une liberté de mouvement à l'élément piézoélectrique 102 qui, maintenu au substrat 122 au niveau de ses extrémités, peut se déformer et engendrer une contrainte dans les éléments magnétiques 110, 112.

Les extrémités de l'élément piézoélectrique 102 peuvent être solidarisées au substrat 122 par l'intermédiaire d'un élément de collage (non visible sur la figure 1), comprenant par exemple des films adhésifs en matière organique thermoplastique ou en polymère.

Dans le dispositif 100, les premier et deuxième éléments électriquement conducteurs 116, 118 sont couplés électriquement ou magnétiquement l'un à l'autre.

Des ouvertures sont formées à travers les couches diélectriques 120 et 121, l'élément piézoélectrique 102 et éventuellement à travers l'un ou les deux éléments magnétiques 110, 112 pour réaliser des contacts et des vias électriquement conducteurs 126. Les contacts forment des accès aux électrodes 108 se trouvant du côté de la première face 104 de l'élément piézoélectrique 102, et forment aussi des accès aux électrodes 108 se trouvant du côté de la première face 106. Ces ouvertures permettent aussi de réaliser les vias 126 qui permettent le contact électrique entre les éléments électriquement conducteurs 116, 118, et éventuellement les éléments magnétiques 110, 112.

La figure 3 représente un premier exemple de réalisation de couplage entre les premier et deuxième éléments électriquement conducteurs 116, 118. La vue a) de cette figure 3 représente en perspective et schématiquement les éléments électriquement conducteurs 116, 118, le premier élément électriquement conducteur 116 étant représenté en trait pointillé et le deuxième élément électriquement conducteur 118 étant représenté en trait plein. Les autres éléments précédemment décrits du dispositif 100 ne sont pas représentés sur la vue a). La vue b) représente une vue en coupe schématique du dispositif 100 sur laquelle les éléments électriquement conducteurs 116, 118, l'élément piézoélectrique 102 et les éléments magnétiques 110, 112 sont représentés.

Dans ce premier exemple de réalisation, les éléments électriquement conducteurs 116, 118 sont couplés électriquement l'un à l'autre, et plus précisément sont reliés en série l'un à l'autre. Cette liaison série est obtenue en réalisant un via conducteur 126 reliant une extrémité du premier élément électriquement conducteur 116 à une extrémité du deuxième élément électriquement conducteur 118 à travers l'élément piézoélectrique 102 et éventuellement à travers l'un ou les deux éléments magnétiques 110, 112 (à travers les deux éléments magnétiques 110, 112 sur la vue b) de la figure 3).

En outre, sur l'exemple de la figure 3, les éléments électriquement conducteurs 116, 118 ont des formes similaires qui, projetées dans un même plan parallèle aux faces principales 104, 106, sont sensiblement superposées. Ainsi, les méandres formés par les premier et deuxième éléments électriquement conducteurs 116, 118 et les formes des éléments magnétiques 110, 112 sont sensiblement identiques sur les deux faces 104, 106 de l'élément piézoélectrique 102. En reliant en série ces méandres, la valeur d'inductance obtenue par le dispositif 100 est doublée par rapport à un dispositif analogue qui ne comporterait qu'un seul des éléments électriquement conducteurs 116, 118. La plage de variation totale de l'inductance et le facteur de qualité obtenus sont inchangés en réalisant une telle liaison série.

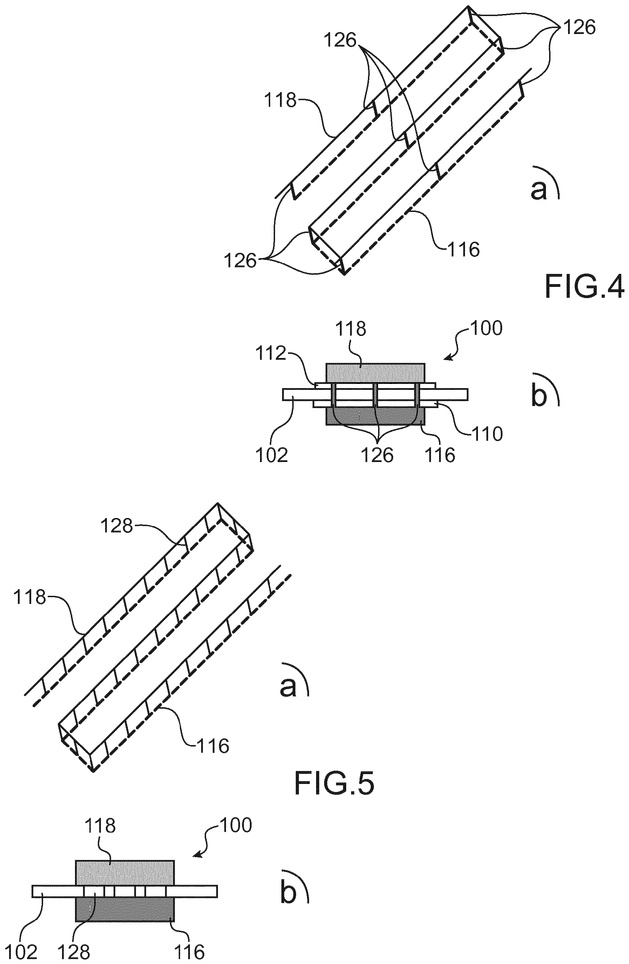

La figure 4 représente un deuxième exemple de réalisation de couplage entre les premier et deuxième éléments électriquement conducteurs 116, 118. Comme pour la figure 3, la vue a) de la figure 4 représente en perspective et schématiquement les éléments électriquement conducteurs 116, 118, le premier élément électriquement conducteur 116 étant représenté en trait pointillé et le deuxième élément électriquement conducteur 118 étant représenté en trait plein. Les autres éléments précédemment décrits du dispositif 100 ne sont pas représentés sur la vue a). La vue b) représente une vue en coupe schématique du dispositif 100 sur laquelle les éléments électriquement conducteurs 116, 118, l'élément piézoélectrique 102 et les éléments magnétiques 110, 112 sont représentés.

Dans ce deuxième exemple de réalisation, les éléments électriquement conducteurs 116, 118 sont couplés électriquement l'un à l'autre, et plus précisément sont reliés en parallèle l'un à l'autre. Cette liaison parallèle est obtenue en réalisant plusieurs vias conducteurs 126 reliant en plusieurs points différents le premier élément électriquement conducteur 116 au deuxième élément électriquement conducteur 118 à travers l'élément piézoélectrique 102 et éventuellement à travers l'un ou les deux éléments magnétiques 110, 112 (à travers les deux éléments magnétiques 110, 112 sur la vue b) de la figure 4).

Comme sur l'exemple de la figure 3, les éléments électriquement conducteurs 116, 118 ont ici des formes similaires qui, projetées dans un même plan parallèle aux faces principales 104, 106, sont sensiblement superposées. Ainsi, les méandres formés par les premier et deuxième éléments électriquement conducteurs 116, 118 et les formes des éléments magnétiques 110, 112 sont sensiblement identiques sur les deux faces 104, 106 de l'élément piézoélectrique 102. En reliant en parallèle ces méandres, la valeur du facteur de qualité du dispositif 100 est doublée par rapport à un dispositif analogue qui ne comporterait qu'un seul des éléments électriquement conducteurs 116, 118. La valeur et la plage de variation totale de l'inductance sont inchangées en réalisant une telle liaison parallèle.

La figure 5 représente un troisième exemple de réalisation du couplage entre les premier et deuxième éléments électriquement conducteurs 116, 118. Comme pour les figures 3 et 4, la vue a) de la figure 5 représente en perspective et schématiquement les éléments électriquement conducteurs 116, 118, le premier élément électriquement conducteur 116 étant représenté en trait pointillé et le deuxième élément électriquement conducteur 118 étant représenté en trait plein. Les autres éléments précédemment décrits du dispositif 100 ne sont pas représentés sur la vue a). La vue b) représente une vue en coupe schématique du dispositif 100 sur laquelle les éléments électriquement conducteurs 116, 118, l'élément piézoélectrique 102 et les éléments magnétiques 110, 112 sont représentés.

Dans ce troisième exemple de réalisation, le dispositif 100 ne comporte pas les éléments magnétiques 110, 112 précédemment décrits. L'élément magnétique, ou noyau magnétique, du dispositif 100 est ici formé par des portions de matériau magnétique réalisées à travers toute l'épaisseur de l'élément piézoélectrique 102 sous la forme de vias magnétiques 128 s'étendant entre les premier et deuxième éléments électriquement conducteurs 116, 118 disposés sur les faces principales 104, 106 de l'élément piézoélectrique 102. Ces vias magnétiques 128 comportent par exemple du FeCoB, ou tout autre matériau magnétique adapté. Les vias magnétiques 128 sont par exemple réalisés en mettant en œuvre un dépôt, par exemple de type PVD (dépôt physique en phase vapeur) ou IBD (dépôt par faisceau d'ions) ou ALD (dépôt de couche atomique), du matériau magnétique, puis une planarisation mécano-chimique (CMP) pour supprimer le matériau magnétique déposé en dehors des emplacements des vias 128.

Comme sur les exemples des figures 3 et 4, les éléments électriquement conducteurs 116, 118 ont ici des formes similaires qui, projetées dans un même plan parallèle aux faces principales 104, 106, sont sensiblement superposées. Ainsi, les méandres formés par les premier et deuxième éléments électriquement conducteurs 116, 118 sont sensiblement identiques sur les deux faces 104, 106 de l'élément piézoélectrique 102. En reliant ces méandres par plusieurs vias magnétiques 128, les valeurs du facteur de qualité, de l'inductance et de la plage de variation totale du dispositif 100 sont augmentées par rapport à un dispositif analogue qui ne comporterait qu'un seul des éléments électriquement conducteurs 116, 118.

En variante de ce troisième exemple de réalisation, il est possible que les éléments électriquement conducteurs 116, 118 soient couplés magnétiquement l'un à l'autre par les vias magnétiques 128 et également que les éléments magnétiques 110, 112 soient présents entre les éléments électriquement conducteurs 116, 118 et l'élément piézoélectrique 102.

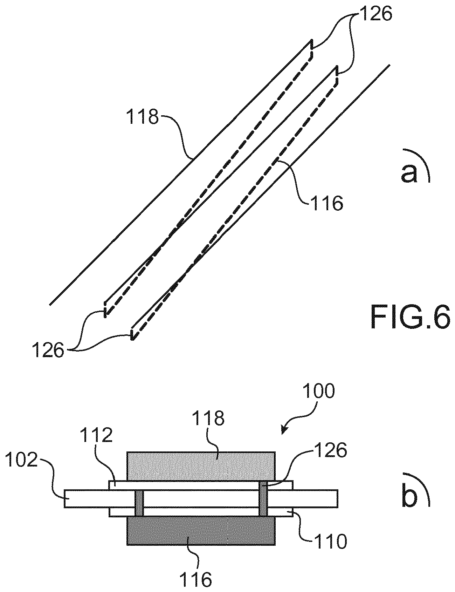

La figure 6 représente un quatrième exemple de réalisation avantageux du couplage entre les premier et deuxième éléments électriquement conducteurs 116, 118. Comme pour les figures 3 à 5, la vue a) de la figure 6 représente en perspective et schématiquement les éléments électriquement conducteurs 116, 118, le premier élément électriquement conducteur 116 étant représenté en trait pointillé et le deuxième élément électriquement conducteur 118 étant représenté en trait plein. Les autres éléments précédemment décrits du dispositif 100 ne sont pas représentés sur la vue a). La vue b) représente une vue en coupe schématique du dispositif 100 sur laquelle l'élément piézoélectrique 102, les éléments électriquement conducteurs 116, 118 et les éléments magnétiques 110, 112 sont représentés.

Dans ce quatrième exemple de réalisation, chacun des éléments électriquement conducteurs 116, 118 comporte des portions de matériau conducteur disjointes les unes des autres. Ces portions disjointes des éléments électriquement conducteurs 116, 118 sont couplées électriquement les unes aux autres par les vias électriquement conducteur 126 de manière à ce que les éléments électriquement conducteurs 116, 118 forment un bobinage, ou un solénoïde, autour de l'élément piézoélectrique 102 et des éléments magnétiques 110, 112. Plusieurs vias conducteurs 126 sont donc réalisés à travers l'élément piézoélectrique 102 et éventuellement à travers l'un ou les deux éléments magnétiques 110, 112 (à travers les deux éléments magnétiques 110, 112 sur la vue b) de la figure 6), chacun des vias 126 reliant une des portions du premier élément électriquement conducteur 116 à une des portions du deuxième élément électriquement conducteur 118.

Contrairement aux précédents exemples de réalisation, les éléments électriquement conducteurs 116, 118 n'ont pas des formes similaires, et cela afin qu'ils puissent former un bobinage. Dans une telle configuration, la plage de variation d'inductance est au moins deux fois plus importante par rapport à un dispositif analogue qui ne comporterait qu'un seul des éléments électriquement conducteurs 116, 118.

D'autres exemples de réalisation des éléments électriquement conducteurs sont possibles.

Dans tous les exemples de réalisation précédemment décrits, chacun des éléments magnétiques 110, 112 présents entre les éléments électriquement conducteurs 116, 118 et l'élément piézoélectrique 102 peut correspondre à une ou plusieurs portions de matériau magnétique, par exemple en forme de bande s'étendant sous les portions conductrices des éléments électriquement conducteurs 116, 118.

Sur l'exemple de la figure 1, les parois latérales de la cavité 124 sont formées par des parties du substrat 122, du fait que la cavité 124 est formée en gravant le substrat 122. En variante, il est possible que les parois latérales de la cavité 124 soient formées entièrement ou partiellement par l'élément de collage polymère servant à la solidarisation du substrat 122.

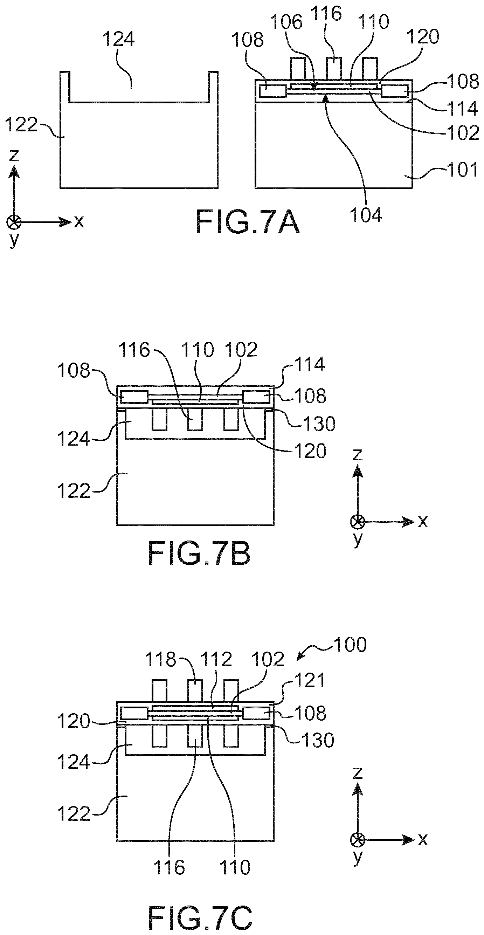

Un procédé de réalisation du dispositif 100 selon le premier mode de réalisation est décrit ci-dessous en lien avec les figures 7A à 7C.

Pour des raisons de compréhension, les figures 7A à 7C, ainsi que les figures suivantes 8 à 9D représentent le dispositif 100 de manière très schématique. Des détails de réalisation du dispositif 100 n'apparaissent pas sur ces figures.

Une couche d'arrêt de gravure 114 est tout d'abord réalisée sur une face avant d'un premier substrat 101 qui est par exemple un substrat de silicium. Cette couche 114 est destinée à servir de couche d'arrêt de gravure lors de la gravure du premier substrat 101 depuis sa face arrière qui sera mise en œuvre ultérieurement. Cette couche d'arrêt de gravure 114 comporte un matériau diélectrique, par exemple du SiO₂, du ZrO₂, ou du TiO₂, ou un matériau conducteur comme par exemple du Ru, du Pt ou un oxyde métallique. Le matériau de cette couche d'arrêt de gravure est choisi tel qu'il présente une sélectivité de gravure importante vis-à-vis du matériau du premier substrat 101. Cette couche est temporaire et sera retirée au moins partiellement, après la gravure du premier substrat 101, afin de pouvoir déposer la couche 112 au plus près de l'élément piézoélectrique 102.

L'élément piézoélectrique 102 est ensuite réalisé sur la couche 114. Cette réalisation de l'élément piézoélectrique 102 comporte par exemple le dépôt d'une couche de matériau piézoélectrique puis une gravure de cette couche selon le motif de l'élément piézoélectrique 102, par exemple un motif d'éprouvette de traction, via une technique de gravure adaptée au matériau piézoélectrique utilisé. La deuxième face 104 de l'élément piézoélectrique 102 se trouve du côté de la couche 114.

Des électrodes 108 sont réalisées sur la première face 106 de l'élément piézoélectrique 102, sur les extrémités de la poutre formée par l'élément 102.

Le premier élément magnétique 110 est ensuite réalisé sur la première face 106 de l'élément piézoélectrique 102, par exemple par dépôt et gravure d'un ou plusieurs matériaux magnétiques.

La couche diélectrique 120 est ensuite déposée en recouvrant l'élément piézoélectrique 102, le premier élément magnétique 110 et les électrodes 108. Cette couche diélectrique 120 est par exemple déposée à basse température par PECVD (dépôt chimique en phase vapeur assisté par plasma).

Le premier élément électriquement conducteur 116 est ensuite réalisé sur l'élément piézoélectrique 102, et plus précisément sur la couche diélectrique 120.

Parallèlement à ces étapes, un deuxième substrat (par exemple en silicium ou en verre), correspondant au substrat 122 précédemment décrit en lien avec la figure 1, est préparé pour recevoir les éléments réalisés sur le premier substrat 101. Ce deuxième substrat 122 est gravé afin de former la cavité 124. En variante, il est possible de former la cavité 124 par un dépôt de polymère sur le substrat 122, puis une photolithographie et une gravure de la cavité 124 dans ce polymère.

Les deux structures obtenues à ce stade du procédé sont représentées sur la figure 7A.

Un collage est ensuite réalisé entre la structure formée sur le premier substrat 101 et celle formée à partir du deuxième substrat 122. Ce collage est réalisé tel que le premier élément électriquement conducteur 116 se retrouve disposé dans la cavité 124. Ce collage permet de réaliser un maintien mécanique des extrémités de l'élément piézoélectrique 102 au deuxième substrat 122. Un cordon de colle 130 est visible sur la figure 7B.

Le maintien mécanique de l'ensemble étant assuré par le deuxième substrat 122, le premier substrat 101 subit tout d'abord via un polissage mécanique retirant une majeure partie de l'épaisseur du premier substrat 101. A l'issue de ce polissage mécanique, l'épaisseur restante du premier substrat est par exemple de l'ordre de 5 µm. Une gravure chimique ou plasma est ensuite mise en œuvre, en se servant de la couche 114 comme couche d'arrêt de gravure, pour supprimer le reste du premier substrat 101.

La couche 114 peut ensuite être partiellement ou totalement gravée aux emplacements destinés à recevoir le deuxième élément magnétique 112 et partout en dehors des électrodes 108, telles qu'elles sont définies sur la deuxième face 104 de l'élément piézoélectrique 102 (et donc à l'aplomb des vias 126 ou 128 ou de certaines zones de l'élément piézoélectrique 102). La couche diélectrique 121, par exemple d'oxyde de silicium, est ensuite réalisée à la surface du dispositif 100 par une technique de dépôt à basse température, comme pour la couche diélectrique 120 et de type PECVD, recouvrant les éléments réalisés du côté de la deuxième face 104 de l'élément piézoélectrique 102.

Enfin, le deuxième élément électriquement conducteur 118 est réalisé sur l'élément piézoélectrique 102 et éventuellement les éléments magnétiques 110, 112 et les vias électriques 126 et/ou les vias magnétiques 128 (voir figure 7C).

De manière optionnelle, un capot peut être reporté sur la structure réalisée afin que le deuxième élément électriquement conducteur 118 soit encapsulé dans une cavité formée par ce capot, de manière analogue au premier élément électriquement conducteur 116. Un tel capot peut être formé par un troisième substrat par exemple similaire au deuxième substrat 122.

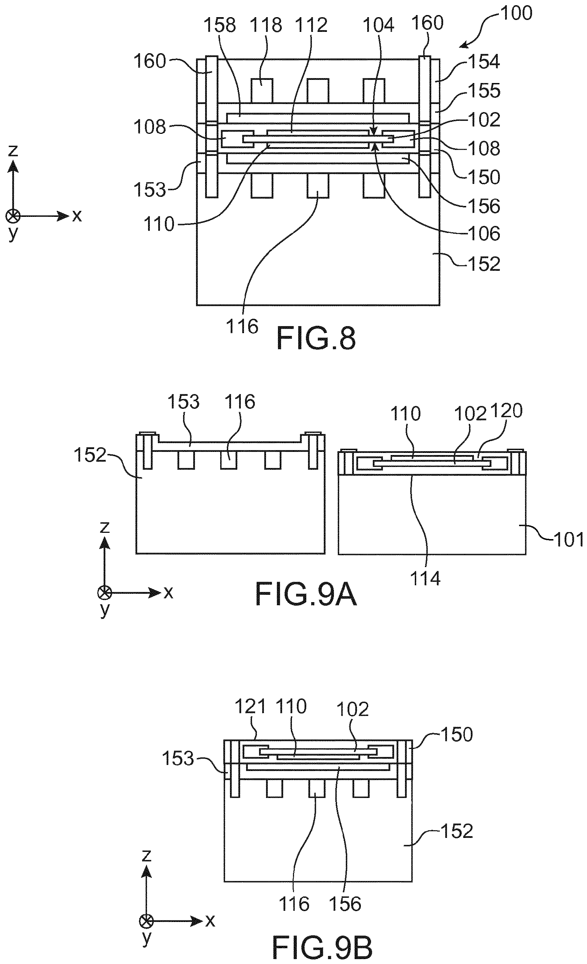

La figure 8 représente le dispositif magnétique 100 selon un deuxième mode de réalisation.

Comme dans le premier mode de réalisation, le dispositif magnétique 100 comporte l'élément piézoélectrique 102, les électrodes 108 et les éléments magnétiques 110, 112, par exemple similaires à ceux précédemment décrits en lien avec le premier mode de réalisation. Ces éléments sont réalisés sur une couche de silicium 150.

Contrairement au premier mode de réalisation dans lequel les premier et deuxième éléments électriquement conducteurs 116, 118 sont réalisés contre l'élément piézoélectrique 102 et les éléments magnétiques 110, 112, les éléments électriquement conducteurs 116, 118, qui sont isolés les uns des autres, sont ici réalisés dans et/ou contre des substrats 152, 154, par exemple en silicium ou en verre, distincts de la couche 150 et solidarisés à la couche 150. Une première cavité 156 est formée dans une couche diélectrique 153, par exemple en silicium polycristallin (en ayant disposé une couche d'oxyde dessous) ou en oxyde de silicium, reportée sur le substrat 152. Cette première cavité 156 forme un espace libre entre le premier élément électriquement conducteur 116 et le premier élément magnétique 110 disposé sur l'élément piézoélectrique 102. Une deuxième cavité 158 est formée dans une couche 155, par exemple similaire à la couche diélectrique 153, reportée sur le substrat 154. La deuxième cavité 156 forme un espace libre entre le deuxième élément électriquement conducteur 118 et le deuxième élément magnétique 112 disposé sur l'élément piézoélectrique 102. La hauteur de chacune des cavités 156, 158 est par exemple comprise entre environ 1 µm et 10 µm.

Les premier et deuxième éléments électriquement conducteurs 116, 118 sont reliés électriquement entre eux par des portions électriquement conductrices 160 formées dans les substrats 152, 154 et à travers les couches 150, 153 et 155. Ces portions électriquement conductrices 160 sont solidarisées entre elles aux jonctions des différents éléments 150, 152, 153, 154 et 155 par un scellement conducteur comprenant par exemple un eutectique.

Les premier et deuxième éléments électriquement conducteurs 116, 118 et les portions électriquement conductrices 160 reliant entre eux ces deux éléments forment un bobinage, ou un solénoïde, disposé autour de l'élément piézoélectrique 102, des éléments magnétiques 110, 112 et des cavités 156, 158. Contrairement au premier mode de réalisation, le bobinage réalisé dans ce deuxième mode de réalisation est espacé du noyau magnétique (c'est-à-dire sans contact mécanique) formé par les éléments magnétiques 110, 112.

Un procédé de réalisation du dispositif 100 selon le deuxième mode de réalisation est décrit ci-dessous en lien avec les figures 9A à 9D.

Comme dans le premier mode de réalisation, l'élément piézoélectrique 102 est réalisé sur le premier substrat 101, en ayant disposée la couche d'arrêt de gravure 114 au préalable sur le premier substrat 101. Les électrodes 108 sont également réalisées sur la première face 106 de l'élément piézoélectrique 102. Le premier élément magnétique 110 est réalisé sur la première face 106 de l'élément piézoélectrique 102. La couche diélectrique 120 est ensuite réalisée puis planarisée afin d'avoir un état de surface avec une rugosité qui doit être très faible afin d'être compatible avec un scellement conducteur qui sera ensuite réalisé. Une partie des portions électriquement conductrices 160 sont également formées dans la partie du premier substrat 101 destinée à être conservée pour former la couche 150.

Parallèlement, le premier élément électriquement conducteur 116 est réalisé dans le substrat 152. Le substrat 152 et le premier élément électriquement conducteur 116 sont ensuite recouverts du matériau diélectrique de la couche 153 dans laquelle la première cavité 156 est réalisée. Une partie des éléments électriquement conducteurs 160 sont formés dans le substrat 152 et à travers la couche 153.

Comme représenté sur la figure 9B, le substrat 152 est solidarisé, via la couche 153, à la structure formée sur le substrat 101. Ce scellement ferme la première cavité 156. Ce scellement relie également électriquement les portions électriquement conductrices 160 formées dans le premier substrat 101 à celles formées dans le substrat 152 et la couche 153.

Le maintien mécanique étant assuré par le substrat 152, le premier substrat 101 est ensuite partiellement supprimé tout d'abord via un polissage mécanique retirant une majeure partie de l'épaisseur du premier substrat 101. A l'issue de ce polissage mécanique, l'épaisseur restante du premier substrat 101 est par exemple de l'ordre de 5 µm. Une gravure chimique ou plasma, en se servant de la couche 114 comme couche d'arrêt de gravure, est ensuite mise en œuvre afin que la partie conservée du premier substrat 101 corresponde à la couche 150. La couche diélectrique 121 est ensuite réalisée, comme précédemment décrit pour la couche diélectrique 120.

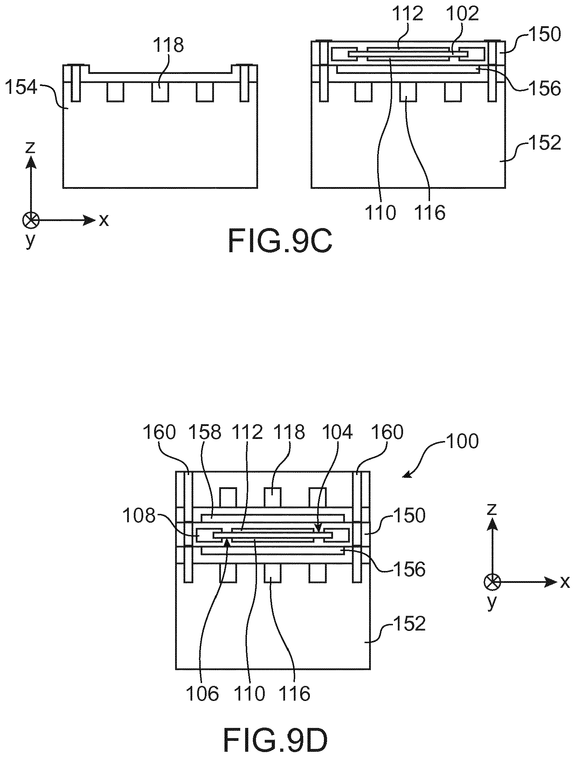

Comme représenté sur la figure 9C, le deuxième élément électriquement conducteur 118 est réalisé dans le substrat 154. Le substrat 154 et le deuxième élément électriquement conducteur 118 sont ensuite recouverts du matériau de la couche 155 dans laquelle la deuxième cavité 158 est réalisée. Une dernière partie des éléments électriquement conducteurs 160 sont formés dans le substrat 154 et à travers la couche 155.

Enfin, le substrat 154 est solidarisé, via la couche 155, à la couche 150. Le scellement réalisé relie électriquement les portions électriquement conductrices 160 formées dans le substrat 154 et la couche 155 à celles formées dans la couche 150. Ce scellement ferme en outre la deuxième cavité 158 et achève la réalisation des liaisons électriques reliant les éléments électriquement conducteurs 116, 118 entre eux. Le substrat 154 est ensuite aminci à l'épaisseur souhaitée, et notamment afin de permettre l'accès à au moins une partie des portions électriquement conductrices 160 depuis la face avant du dispositif 100 (figure 9D).

Dans ce procédé formant le dispositif 100 selon le deuxième mode de réalisation, les techniques de scellement mises en œuvre pour solidariser les substrats entre eux tout en formant les contacts électriques entre les différentes portions électriquement conductrices 160 sont par exemple similaires à celles décrites dans le document BAUM Mario et al., « Eutectic wafer bonding for 3-D integration », Electronic System-Integration Technology Conférence (ESTC), 2010 3rd. IEEE, 2010. p. 1-6, et dans le document de Sumant Sood, « Advanced Metal-Eutectic Bonding for High Volume MEMS WLP », IEEE MEMS Bay Area Meeting, 26 février 2014.

Les scellements mis en œuvre dans ce procédé peuvent correspondre à des scellements avec couches intermédiaires, ou bien des collages directs.

Lorsque des couches intermédiaires sont utilisées, le procédé est mis en œuvre de préférence tel que les températures en jeu soient situées entre 180°C et 450°C. Il est par exemple possible de réaliser une thermocompression de type Au-Si, ou de préférence de type Au-Au pour obtenir une plus faible résistivité entre les portions électriquement conductrices 160. Une telle thermocompression peut être mise en œuvre lorsqu'un cordon de scellement d'épaisseur comprise entre environ 5 µm et 100 µm est souhaité. En variante, il est possible de mettre en œuvre un scellement eutectique, qui peut être utilisé lorsqu'un cordon de scellement d'épaisseur comprise entre environ 1 µm et 10 µm est souhaité. De plus, par rapport à la thermocompression, le scellement eutectique permet de garantir une force de collage plus importante, ce qui est préférable pour la mise en œuvre des étapes telles qu'une CMP. Le tableau ci-dessous donne plusieurs exemples d'alliages eutectiques pouvant être utilisé pour mettre en œuvre les scellements entre substrats lors de la réalisation du dispositif 100 :

| **Alliage Eutectique** | **Composition (% en poids)** | **Température eutectique** | **Température de collage** |
|---|---|---|---|
| Au-In | 0,6 / 99,4 | 156 °C | 180 - 210 °C |
| Cu-Sn | 5 / 95 | 231 °C | 240 - 270 °C |
| Au-Sn | 80 / 20 | 280 °C | 280 - 310 °C |
| Au-Ge | 28 / 72 | 361 °C | 380 - 400 °C |
| Au-Si | 97,7 / 2,9 | 363 °C | 390-415 °C |
| Al-Ge | 46 / 51 | 419 °C | 420 - 450 °C |

Dans le tableau ci-dessus, l'eutectique Al-Ge est celui permettant d'obtenir les plus faibles valeurs de résistance de contact électrique, inférieures à environ 1 Ohm. Pour cet eutectique Al-Ge, l'aluminium comporte par exemple une épaisseur égale à environ 1 µm et le germanium une épaisseur égale à environ 0,5 µm. De manière générale, le rapport entre l'épaisseur de germanium et l'épaisseur d'aluminium est compris entre environ 0,5 et 0,6. Avec cet eutectique, le scellement peut être réalisé à une température comprise entre environ 420 °C et 450 °C, avec une pression appliquée comprise entre environ 15 kN et 50 kN, et pendant une durée comprise entre environ 3 et 30 mn.

Qu'une thermocompression ou un scellement eutectique soit mis en œuvre, la valeur des résistances de contact à l'interface est abaissée à un niveau suffisamment faible, par exemple inférieure à environ 10hm.

En variante, un collage direct, par exemple Cu-Cu ou Au-Au, peut être mis en œuvre. Par rapport aux précédentes techniques de scellement, un collage direct permet d'obtenir une plus faible résistance de contact et une plus grande force de collage. De plus, ce collage direct est totalement compatible avec des surfaces dites « mixte », c'est-à-dire comportant des parties électriquement conductrices et des parties électriquement isolantes.

Selon une autre variante applicable aux modes de réalisation précédemment décrits, le collage réalisé peut avantageusement être un scellement sur verre par collage direct ou anodique, ce qui permet d'abaisser au maximum les contributions parasites des substrats de silicium utilisés.

En raison des températures pouvant être engendrées au cours des étapes de scellement ou de collage mises en œuvre lors de la réalisation du dispositif selon le deuxième mode de réalisation, le matériau magnétique utilisé pour la réalisation du ou des éléments magnétiques 110, 112 du dispositif 100 correspond avantageusement à un matériau magnétique à forte perméabilité et à faibles pertes à très hautes fréquences, et qui soit compatible avec un scellement mis en œuvre à une température de l'ordre de 400°C. Chacun des éléments magnétiques 110, 112 peut comporter une alternance de couches ferromagnétiques (F) et antiferromagnétiques (AF) utilisant la propriété de couplage d'échange interfacial entre ces deux matériaux. Le matériau AF est en général recuit sous champ magnétique pour obtenir la bonne phase. Un tel empilement de matériaux magnétiques est par exemple décrit dans le document FR 2 939 990.

Un autre empilement de matériaux magnétiques utilisable pour le dispositif 100 correspond à celui décrit dans le document de Kevin Garello et al., « Magnetodielectric thin film heterostructure with high permeability and permittivity ». IEEE Transactions on Magnetics, 2009, vol. 45, n°10, p. 4325-4328, et qui correspond à un empilement de type FeCo (épaisseur d'environ 25 nm) / NiMn (épaisseur d'environ 30 nm)/FeCo (épaisseur d'environ 25 nm) répété 2 fois et recuit à 300°C. Le matériau peut supporter ensuite une élévation de température jusqu'à 400°C.

De manière avantageuse, l'empilement de matériaux magnétiques utilisé correspond à un empilement de PtMn (épaisseur par exemple égale à environ 30 nm) et de FeCo (épaisseur par exemple égale à environ 20 nm), cet empilement de ces deux matériaux étant répété jusqu'à 10 fois et recuit ensuite sous champ magnétique à environ 425°C. Lorsque cet empilement de matériaux magnétiques est soumis à un recuit ultérieur à environ 425°C, correspondant par exemple à la température atteinte lors d'un scellement Al-Ge, ces matériaux magnétiques restent parfaitement fonctionnels. Cet empilement comprenant les couches couplées de matériaux F/AF qui est bien adapté la réalisation des éléments magnétiques 110, 112 du dispositif 100, les couches de FeCo présentant des niveaux de magnétostriction élevés (jusqu'à 150 ppm). Le matériau ferromagnétique comporte avantageusement du Fe et/ou du Co, et le matériau antiferromagnétique comporte avantageusement du Mn.

Les exemples et types de matériaux magnétiques décrits ci-dessus pour la réalisation du dispositif 100 selon le deuxième mode de réalisation peuvent s'appliquer également pour la réalisation des éléments magnétiques 110, 112 du dispositif 100 selon le premier mode de réalisation, et également pour la réalisation des vias magnétiques 128.

Quel que soit le mode de réalisation du dispositif 100, lorsque les éléments électriquement conducteurs 116 et 118 sont reliés électriquement entre eux en formant un bobinage, ou un solénoïde, les spires de ce bobinage peuvent être orientées parallèlement ou perpendiculairement à l'axe de déformation de l'élément piézoélectrique 102. Toutefois, l'orientation de ces spires est choisie en tenant compte de l'axe d'anisotropie du matériau magnétique, c'est-à-dire la direction de facile aimantation pour un matériau ferromagnétique ou la direction de piégeage pour un empilement ferromagnétique / antiferromagnétique, cet axe d'anisotropie étant orienté parallèlement aux spires afin que s'exerce un couple oscillant sur les moments magnétiques. Ainsi, l'axe de facile aimantation, ou la direction de piégeage, peut-être dans un premier cas parallèle à la contrainte générée par l'élément piézoélectrique 102, ou dans un deuxième cas perpendiculaire à cette contrainte.

Dans ce premier cas, il n'existe qu'une seule position d'équilibre (minimum d'énergie) qui correspond à l'alignement de tous les moments magnétiques selon la direction de la contrainte appliquée. C'est la configuration la plus stable en fonctionnement et la moins sensible aux imperfections de fabrication (désalignement et contrainte résiduelle de l'élément magnétique 110 ou 112). En d'autres termes, la direction d'aimantation ne dévie jamais de l'axe de la poutre ou de l'alignement avec les spires.

Dans le deuxième cas, lorsque le matériau magnétique est ferromagnétique à anisotropie uniaxiale (par exemple du FeCoB), il n'existe que deux positions d'équilibre : une position initiale (0°) qui correspond à l'axe d'anisotropie du matériau magnétique orienté perpendiculairement à la contrainte, et une position finale (90°) qui correspond à l'alignement de tous les moments magnétiques selon la direction de la contrainte appliquée. Il n'y a pas de position angulaire intermédiaire. Si bien que l'action de la contrainte exercée par l'élément piézoélectrique 102 sur ce matériau magnétique a pour effet *in fine* de faire basculer la direction d'aimantation entre ces deux états uniquement. Après basculement, la fonctionnalité initiale de l'inductance variable est perdue.

Dans le deuxième cas, lorsque l'élément magnétique est un empilement de matériaux F/AF à anisotropie unidirectionnelle, il existe ici une infinité de positions d'équilibre entre 90° (position initiale) et 0° (position finale). Pour chaque valeur de tension électrique (ou champ électrique E) appliquée sur l'élément piézoélectrique 102, l'aimantation tourne d'un angle déterminé, de la position initiale à 90° jusqu'à la position finale à 0°. Le dispositif 100 exploite dans ce cas la dépendance angulaire du tenseur de la perméabilité haute fréquence uniquement valable pour les couches F/AF du fait du caractère unidirectionnel de l'anisotropie.

L'utilisation d'un empilement de couches F/AF est très avantageuse par rapport aux couches simples F. En effet, les contraintes résiduelles de fabrication induiront ici simplement un offset angulaire (on ne partira pas de 90° mais de 80° par exemple) mais la fonctionnalité de l'inductance variable est conservée jusqu'à 0°.

## Revendications

1. Procédé de réalisation d'un dispositif magnétique (100) intégré à inductance variable, comportant au moins la mise en œuvre des étapes suivantes :
a) réalisation d'un élément piézoélectrique (102) sur un premier substrat (101) telle qu'une deuxième face (104) de l'élément piézoélectrique (102) soit disposée du côté du premier substrat (101) ;
b) réalisation d'un premier élément électriquement conducteur (116) du côté d'une première face (106), opposée à la deuxième face (104), de l'élément piézoélectrique (102), et solidarisation d'extrémités de l'élément piézoélectrique (102) à un deuxième substrat (122, 152) telle que la première face (106) de l'élément piézoélectrique (102) soit disposée en regard d'une première cavité (124, 156) formée entre une partie du deuxième substrat (122, 152) et l'élément piézoélectrique (102), le premier élément électriquement conducteur (116) étant disposé dans et/ou contre le deuxième substrat (152) ou contre l'élément piézoélectrique (102) ;
c) suppression d'au moins une partie du premier substrat (101) ;
d) réalisation d'un deuxième élément électriquement conducteur (118) du côté de la deuxième face (104) de l'élément piézoélectrique (102) ;
et comportant en outre la réalisation d'un couplage électrique et/ou magnétique des premier et deuxième éléments électriquement conducteurs (116, 118), et la réalisation d'au moins un élément magnétique (110, 112, 128) disposé contre et/ou dans l'élément piézoélectrique (102) et entre les premier et deuxième éléments électriquement conducteurs (116, 118).

2. Procédé selon la revendication 1, dans lequel :
- lors de l'étape b), le premier élément électriquement conducteur (116) est réalisé au moins en partie contre la première face (106) de l'élément piézoélectrique (102), puis le deuxième substrat (122) est solidarisé aux extrémités de l'élément piézoélectrique (102) tel que le premier élément électriquement conducteur (116) soit disposé dans la première cavité (124) ;
- lors de l'étape d), le deuxième élément électriquement conducteur (118) est réalisé au moins en partie contre la deuxième face (104) de l'élément piézoélectrique (102).

3. Procédé selon la revendication 2, dans lequel la solidarisation des extrémités de l'élément piézoélectrique (102) au deuxième substrat (122) est mise en œuvre à une température inférieure à environ 300°C et par l'intermédiaire d'un élément de collage (130) comportant au moins un polymère.

4. Procédé selon la revendication 3, dans lequel l'élément de collage (130) forme des parois latérales de la première cavité (124).

5. Procédé selon la revendication 1, dans lequel :
- lors de l'étape b), le premier élément électriquement conducteur (116) est réalisé dans et/ou contre le deuxième substrat (152), puis le deuxième substrat (152) est solidarisé aux extrémités de l'élément piézoélectrique (102) tel que la première face (106) de l'élément piézoélectrique (102) soit disposée en regard du premier élément électriquement conducteur (116) et espacée du premier élément électriquement conducteur (116) par la première cavité (156) ;
- lors de l'étape d), le deuxième élément électriquement conducteur (118) est réalisé dans et/ou contre un troisième substrat (154), puis le troisième substrat (154) est solidarisé aux extrémités de l'élément piézoélectrique (102) tel que la deuxième face (104) de l'élément piézoélectrique (102) soit disposée en regard du deuxième élément électriquement conducteur (118) et espacée du deuxième élément électriquement conducteur (118) par une deuxième cavité (158) formée entre l'élément piézoélectrique (102) et le troisième substrat (154).

6. Procédé selon la revendication 5, dans lequel les premier et deuxième éléments électriquement conducteurs (116, 118) sont reliés électriquement l'un à l'autre par l'intermédiaire de portions électriquement conductrices (160) réalisées dans les premier, deuxième et troisième substrats (101, 152, 154) et reliées électriquement entre elles lors de la mise en œuvre des étapes b) et d).

7. Procédé selon l'une des revendications 5 ou 6, dans lequel les solidarisations des extrémités de l'élément piézoélectrique (102) aux deuxième et troisième substrats (152, 154) sont mises en œuvre à une température inférieure à environ 400°C par thermocompression ou scellement eutectique ou collage direct ou collage anodique.

8. Procédé selon l'une des revendications précédentes, dans lequel la réalisation du au moins un élément magnétique (110, 112, 128) comporte, entre les étapes a) et b), la réalisation d'au moins un premier élément magnétique (110) contre la première face (106) de l'élément piézoélectrique (102), et dans lequel :
- lorsque le premier élément électriquement conducteur (116) est réalisé contre la première face (106) de l'élément piézoélectrique (102), le premier élément électriquement conducteur (116) est disposé contre le premier élément magnétique (110) tel que le premier élément magnétique (110) soit disposé entre le premier élément électriquement conducteur (116) et l'élément piézoélectrique (102), ou
- lorsque le premier élément électriquement conducteur (116) est réalisé dans et/ou contre le deuxième substrat (152), la première cavité (156) est disposée entre le premier élément magnétique (110) et le premier élément électriquement conducteur (116).

9. Procédé selon l'une des revendications précédentes, dans lequel la réalisation du au moins un élément magnétique (110, 112, 128) comporte, entre les étapes c) et d), la réalisation d'au moins un deuxième élément magnétique (112) contre la deuxième face (104) de l'élément piézoélectrique (102), et dans lequel :
- lorsque le deuxième élément électriquement conducteur (118) est réalisé contre la deuxième face (104) de l'élément piézoélectrique (102), le deuxième élément électriquement conducteur (118) est disposé contre le deuxième élément magnétique (112) tel que le deuxième élément magnétique (112) soit disposé entre le deuxième élément électriquement conducteur (118) et l'élément piézoélectrique (102), ou
- lorsque le deuxième élément électriquement conducteur (118) est réalisé dans et/ou contre le troisième substrat (154), la deuxième cavité (158) est disposée entre le deuxième élément magnétique (112) et le deuxième élément électriquement conducteur (118).

10. Procédé selon l'une des revendications précédentes, comportant en outre, entre les étapes c) et d), la réalisation d'au moins un via électriquement conducteur (126) tel qu'à l'issue de l'étape d), les premier et deuxième éléments électriquement conducteurs (116, 118) soient reliés électriquement l'un à l'autre, par ledit au moins un via électriquement conducteur (126), en série ou en parallèle ou tels que les premier et deuxième éléments électriquement conducteurs (116, 118) forment au moins un solénoïde.

11. Procédé selon l'une des revendications précédentes, dans lequel la réalisation du au moins un élément magnétique (110, 112, 128) comporte, entre les étapes c) et d), la réalisation d'au moins une portion de matériau magnétique (128) telle qu'à l'issue de l'étape d), les premier et deuxième éléments électriquement conducteurs (116, 118) soient couplés magnétiquement l'un à l'autre par ladite au moins une portion de matériau magnétique (128).

12. Dispositif magnétique (100) intégré à inductance variable, comportant au moins :
- un substrat (122, 152);
- un élément piézoélectrique (102) comportant des première et deuxième faces (104, 106) opposées, dont des extrémités sont solidarisées au substrat (122, 152) et dont la première face (106) est disposée du côté du substrat (122, 152) ;
- une première cavité (124, 156) disposée entre une partie du substrat (122, 152) et l'élément piézoélectrique (102) ;
- un premier élément électriquement conducteur (116) disposé du côté de la première face (106) de l'élément piézoélectrique (102), et un deuxième élément électriquement conducteur (118) disposé du côté de la deuxième face (104) de l'élément piézoélectrique (102), les premier et deuxième éléments électriquement conducteurs (116, 118) étant couplés électriquement et/ou magnétiquement l'un à l'autre ;
- un premier élément magnétique (110) disposé contre la première face (106) de l'élément piézoélectrique (102) et entre l'élément piézoélectrique (102) et le premier élément électriquement conducteur (116), et un deuxième élément magnétique (112) disposé contre la deuxième face (104) de l'élément piézoélectrique (102) et entre l'élément piézoélectrique (102) et le deuxième élément électriquement conducteur (118).

13. Dispositif (100) selon la revendication 12, dans lequel le premier et/ou le deuxième élément électriquement conducteur (116, 118) comporte une piste électriquement conductrice en forme de méandres.

14. Dispositif (100) selon l'une des revendications 12 ou 13, dans lequel le premier élément électriquement conducteur (116) est disposé au moins en partie contre la première face (106) de l'élément piézoélectrique (102) et dans la première cavité (124), et dans lequel le deuxième élément électriquement conducteur (118) est disposé au moins en partie contre la deuxième face (104) de l'élément piézoélectrique (102).

15. Dispositif selon l'une des revendications 12 ou 13, dans lequel le premier élément électriquement conducteur (116) est disposé dans et/ou contre le substrat (152) tel que la première face (106) de l'élément piézoélectrique (102) soit disposée en regard du premier élément électriquement conducteur (116) et espacée du premier élément électriquement conducteur (116) par la première cavité (156), et dans lequel le deuxième élément électriquement conducteur (118) est disposé dans et/ou contre un autre substrat (154) tel que la deuxième face (104) de l'élément piézoélectrique (102) soit disposée en regard du deuxième élément électriquement conducteur (118) et espacée du deuxième élément électriquement conducteur (118) par une deuxième cavité (158) formée entre l'élément piézoélectrique (102) et une partie dudit autre substrat (154).

16. Dispositif (100) selon l'une des revendications 12 à 15, dans lequel chacun des premier et deuxième éléments magnétiques (110, 112) comporte un empilement d'au moins une portion de matériau ferromagnétique et d'au moins une portion de matériau antiferromagnétique.

17. Dispositif (100) selon l'une des revendications 12 à 16, comportant en outre au moins un via électriquement conducteur (126) reliant électriquement les premier et deuxième éléments électriquement conducteurs (116, 118) l'un à l'autre en série ou en parallèle ou tels que les premier et deuxième éléments électriquement conducteurs (116, 118) forment au moins un solénoïde, et/ou au moins une portion de matériau magnétique (128) traversant l'élément piézoélectrique (102) et couplant magnétiquement les premier et deuxième éléments électriquement conducteurs (116, 118) l'un à l'autre.

## Patentansprüche

1. Verfahren zum Herstellen einer integrierten magnetischen Vorrichtung (100) mit variabler Induktivität, umfassend wenigstens das Durchführen der folgenden Schritte:
a) Herstellen eines piezoelektrischen Elements (102) an einem ersten Substrat (101) derart, dass eine zweite Fläche (104) des piezoelektrischen Elements (102) an der Seite des ersten Substrats (101) angeordnet wird;
b) Herstellen eines ersten elektrisch leitfähigen Elements (116) an der Seite einer ersten Fläche (106) gegenüber der zweiten Fläche (104) des piezoelektrischen Elements (102) und Verbinden von Enden des piezoelektrischen Elements (102) mit einem zweiten Substrat (122, 152) derart, dass die erste Fläche (106) des piezoelektrischen Elements (102) zu einem ersten Hohlraum (124, 156) weisend angeordnet wird, welcher zwischen einem Abschnitt des zweiten Substrats (122, 152) und dem piezoelektrischen Element (102) gebildet ist, wobei das erste elektrisch leitfähige Element (116) in und/oder gegen das zweite Substrat (152) oder gegen das piezoelektrische Element (102) angeordnet wird;
c) Entfernen von wenigstens einem Abschnitt des ersten Substrats (101);
d) Herstellen eines zweiten elektrisch leitfähigen Elements (118) an der Seite der zweiten Fläche (104) des piezoelektrischen Elements (102);
und ferner umfassend das Herstellen einer elektrischen und/oder magnetischen Kopplung der ersten und zweiten elektrisch leitfähigen Elemente (116, 118) und das Herstellen von wenigstens einem magnetischen Element (110, 112, 128), welches gegen und/oder in dem piezoelektrischen Element (102) und zwischen den ersten und zweiten elektrisch leitfähigen Elementen (116, 118) angeordnet ist.

2. Verfahren nach Anspruch 1, wobei:
- während des Schritts b) das erste elektrisch leitfähige Element (116) wenigstens teilweise gegen die erste Fläche (106) des piezoelektrischen Elements (102) hergestellt wird und dann das zweite Substrat (122) mit den Enden des piezoelektrischen Elements (102) derart verbunden wird, dass das erste elektrisch leitfähige Element (116) in dem ersten Hohlraum (124) angeordnet wird;
- während Schritt d) das zweite elektrisch leitfähige Element (118) wenigstens teilweise gegen die zweite Fläche (104) des piezoelektrischen Elements (102) hergestellt wird.

3. Verfahren nach Anspruch 2, wobei das Verbinden der Enden des piezoelektrischen Elements (102) mit dem zweiten Substrat (122) bei einer Temperatur durchgeführt wird, welche kleiner als etwa 300°C ist, und durch Vermittlung durch ein Haftelement (130), welches wenigstens ein Polymer umfasst.

4. Verfahren nach Anspruch 3, wobei das Haftelement (130) laterale Wände des ersten Hohlraums (124) bildet.

5. Verfahren nach Anspruch 1, wobei:
- während des Schritts b) das erste elektrisch leitfähige Element (116) an und/oder gegen das zweite Substrat (152) hergestellt wird und dann das zweite Substrat (152) mit den Enden des piezoelektrischen Elements (102) derart verbunden wird, dass die erste Fläche (106) des piezoelektrischen Elements (102) zu dem ersten elektrisch leitfähigen Element (116) weisend und von dem ersten elektrisch leitfähigen Element (116) durch den ersten Hohlraum (156) beabstandet angeordnet wird;
- während des Schritts d) das zweite elektrisch leitfähige Element (118) in und/oder gegen ein drittes Substrat (154) hergestellt wird und dann das dritte Substrat (154) mit den Enden des piezoelektrischen Elements (102) derart verbunden wird, dass die zweite Fläche (104) des piezoelektrischen Elements (102) zu dem zweiten elektrisch leitfähigen Element (118) weisend und von dem zweiten elektrisch leitfähigen Element (118) durch einen zweiten Hohlraum (158) beabstandet angeordnet wird, welcher zwischen dem piezoelektrischen Element (102) und dem dritten Substrat (154) gebildet ist.

6. Verfahren nach Anspruch 5, wobei die ersten und zweiten elektrisch leitfähigen Elemente (116, 118) elektrisch miteinander durch Vermittlung durch elektrisch leitfähige Abschnitte (160) gekoppelt werden, welche in den ersten, zweiten und dritten Substraten (101, 152, 154) hergestellt und untereinander beim Durchführen der Schritte b) und d) elektrisch gekoppelt werden.

7. Verfahren nach einem der Ansprüche 5 oder 6, wobei die Verbindungen der Enden des piezoelektrischen Elements (102) mit den zweiten und dritten Substraten (152, 154) bei einer Temperatur, welche kleiner als etwa 400°C ist, durch Thermokompression oder eutektisches Versiegeln oder direktes Kleben oder anodisches Kleben durchgeführt werden.

8. Verfahren nach einem der vorhergehenden Ansprüche, wobei das Herstellen des wenigstens einen magnetischen Elements (110, 112, 128) zwischen den Schritten a) und b) das Herstellen von wenigstens einem ersten magnetischen Element (110) gegen die erste Fläche (106) des piezoelektrischen Elements (102) umfasst und wobei:
- während das erste elektrisch leitfähige Element (116) gegen die erste Fläche (106) des piezoelektrischen Elements (102) hergestellt wird, das erste elektrisch leitfähige Element (116) gegen das erste magnetische Element (110) derart angeordnet wird, dass das erste magnetische Element (110) zwischen dem ersten elektrisch leitfähigen Element (116) und dem piezoelektrischen Element (102) angeordnet wird, oder
- während das erste elektrisch leitfähige Element (116) in und/oder gegen das zweite Substrat (152) hergestellt wird, der erste Hohlraum (156) zwischen dem ersten magnetischen Element (110) und dem ersten elektrisch leitfähigen Element (116) hergestellt wird.

9. Verfahren nach einem der vorhergehenden Ansprüche, wobei das Herstellen des wenigstens einen magnetischen Elements (110, 112, 128) zwischen den Schritten c) und d) das Herstellen von wenigstens einem zweiten magnetischen Element (112) gegen die zweite Fläche (104) des piezoelektrischen Elements (102) umfasst und wobei:
- während das zweite elektrisch leitfähige Element (118) gegen die zweite Fläche (104) des piezoelektrischen Elements (102) hergestellt wird, das zweite elektrisch leitfähige Element (118) gegen das zweite magnetische Element (112) derart angeordnet wird, dass das zweite magnetische Element (112) zwischen dem zweiten elektrisch leitfähigen Element (118) und dem piezoelektrischen Element (102) angeordnet wird, oder
- während das zweite elektrisch leitfähige Element (118) in und/oder zwischen dem dritten Substrat (154) hergestellt wird, der zweite Hohlraum (158) zwischen dem zweiten magnetischen Element (112) und dem zweiten elektrisch leitfähigen Element (118) angeordnet wird.

10. Verfahren nach einem der vorhergehenden Ansprüche, ferner umfassend zwischen den Schritten c) und d) das Herstellen von wenigstens einer elektrisch leitfähigen Leitung (126) derart, dass am Ende des Schritts d) die ersten und zweiten elektrisch leitfähigen Elemente (116, 118) durch die wenigstens eine elektrisch leitfähige Leitung (126) in Reihe oder parallel oder derart elektrisch miteinander gekoppelt werden, dass die ersten und zweiten elektrisch leitfähigen Elemente (116, 118) wenigstens eine Spule bilden.

11. Verfahren nach einem der vorhergehenden Ansprüche, wobei das Herstellen des wenigstens einen magnetischen Elements (110, 112, 128) zwischen den Schritten c) und d) das Herstellen von wenigstens einem Abschnitt aus magnetischem Material (128) derart umfasst, dass am Ende des Schritts d) die ersten und zweiten elektrisch leitfähigen Elemente (116, 118) magnetisch miteinander durch den wenigstens einen Abschnitt aus magnetischem Material (128) gekoppelt werden.

12. Integrierte magnetische Vorrichtung (100) mit variabler Induktivität, umfassend wenigstens:
- ein Substrat (122, 152);
- ein piezoelektrisches Element (102), welches gegenüberliegende erste und zweite Flächen (104, 106) umfasst, von welchen Enden mit dem Substrat (122, 152) verbunden sind, und wobei die erste Fläche (106) an der Seite des Substrats (122, 152) angeordnet ist;
- einen ersten Hohlraum (124, 156), welcher zwischen einem Abschnitt des Substrats (122, 152) und dem piezoelektrischen Element (102) angeordnet ist;
- ein erstes elektrisch leitfähiges Element (116), welches an der Seite der ersten Fläche (106) des piezoelektrischen Elements (102) angeordnet ist, und ein zweites elektrisch leitfähiges Element (118), welches an der Seite der zweiten Fläche (104) des piezoelektrischen Elements (102) angeordnet ist, wobei die ersten und zweiten elektrisch leitfähigen Elemente (116, 118) elektrisch und/oder magnetisch miteinander gekoppelt sind;
- ein erstes magnetisches Element (110), welches gegen die erste Fläche (106) des piezoelektrischen Elements (102) und zwischen dem piezoelektrischen Element (102) und dem ersten elektrisch leitfähigen Element (116) angeordnet ist, sowie ein zweites magnetisches Element (112), welches gegen die zweite Fläche (104) des piezoelektrischen Elements (102) und zwischen dem piezoelektrischen Element (102) und dem zweiten elektrisch leitfähigen Element (118) angeordnet ist.

13. Vorrichtung (100) nach Anspruch 12, wobei das erste und/oder das zweite elektrisch leitfähige Element (116, 118) eine elektrisch leitfähige Bahn in Form von Windungen umfasst.

14. Vorrichtung (100) nach einem der Ansprüche 12 oder 13, wobei das erste elektrisch leitfähige Element (116) wenigstens teilweise gegen die erste Fläche (106) des piezoelektrischen Elements (102) und in dem ersten Hohlraum (124) angeordnet ist, und wobei das zweite elektrisch leitfähige Element (118) wenigstens teilweise gegen die zweite Fläche (104) des piezoelektrischen Elements (102) angeordnet ist.

15. Vorrichtung nach einem der Ansprüche 12 oder 13, wobei das erste elektrisch leitfähige Element (116) in und/oder gegen das Substrat (152) derart angeordnet ist, dass die erste Fläche (106) des piezoelektrischen Elements (102) zu dem ersten elektrisch leitfähigen Element (116) weisend und von dem ersten elektrisch leitfähigen Element (116) durch den ersten Hohlraum (156) beabstandet angeordnet ist, und wobei das zweite elektrisch leitfähige Element (118) in und/oder gegen ein weiteres Substrat (154) derart angeordnet ist, dass die zweite Fläche (104) des piezoelektrischen Elements (102) zu dem zweiten elektrisch leitfähigen Element (118) weisend und von dem zweiten elektrisch leitfähigen Element (118) durch einen zweiten Hohlraum (158) beabstandet angeordnet ist, welcher zwischen dem piezoelektrischen Element (102) und einem Abschnitt des weiteren Substrats (154) gebildet ist.

16. Vorrichtung (100) nach einem der Ansprüche 12 bis 15, wobei jedes aus den ersten und zweiten magnetischen Elementen (110, 112) einen Stapel aus wenigstens einem Abschnitt von ferromagnetischem Material und wenigstens einem Abschnitt aus antiferromagnetischem Material umfasst.

17. Vorrichtung (100) nach einem der Ansprüche 12 bis 16, ferner umfassend wenigstens eine elektrisch leitfähige Leitung (126), welche die ersten und zweiten elektrisch leitfähigen Elemente (116, 118) miteinander in Reihe oder parallel oder derart koppelt sind, dass die ersten und zweiten elektrisch leitfähigen Elemente (116, 118) wenigstens eine Spule bilden, und/oder wenigstens einen Abschnitt von magnetischem Material (128), welcher durch das piezoelektrische Element (102) hindurchtritt und die ersten und zweiten elektrisch leitfähigen Elemente (116, 118) magnetisch miteinander koppelt.

## Claims

1. Method for producing an integrated magnetic device (100) with variable inductance, comprising at least the implementation of the following steps:
a) making of a piezoelectric element (102) on a first substrate (101) such that a second face (104) of the piezoelectric element (102) is arranged on the side of the first substrate (101);
b) making of a first electrically conductive element (116) on the side of a first face (106), opposite the second face (104), of the piezoelectric element (102), and fastening of the ends of the piezoelectric element (102) to a second substrate (122, 152) such that the first face (106) of the piezoelectric element (102) is arranged facing a first cavity (124, 156) formed between a portion of the second substrate (122, 152) and the piezoelectric element (102), the first electrically conductive element (116) being arranged in and/or against the second substrate (152) or against the piezoelectric element (102);
c) removing of at least one portion of the first substrate (101);
d) making of a second electrically conductive element (118) on the side of the second face (104) of the piezoelectric element (102);
and further comprising the making of an electrical and/or magnetic coupling of the first and second electrically conductive elements (116, 118), and the making of at least one magnetic element (110, 112, 128) arranged against and/or in the piezoelectric element (102) and between the first and second electrically conductive elements (116, 118).

2. Method according to claim 1, wherein:
- during the step b), the first electrically conductive element (116) is made at least partially against the first face (106) of the piezoelectric element (102), then the second substrate (122) is fastened to the ends of the piezoelectric element (102) such that the first electrically conductive element (116) is arranged in the first cavity (124);
- during the step d), the second electrically conductive element (118) is made at least partially against the second face (104) of the piezoelectric element (102).

3. Method according to claim 2, wherein the fastening of the ends of the piezoelectric element (102) to the second substrate (122) is implemented at a temperature less than approximately 300°C and by the intermediary of a bonding element (130) comprising at least one polymer.

4. Method according to claim 3, wherein the bonding element (130) forms the lateral walls of the first cavity (124).

5. Method according to claim 1, wherein:
- during the step b), the first electrically conductive element (116) is produced in and/or against the second substrate (152), then the second substrate (152) is fastened to the ends of the piezoelectric element (102) such that the first face (106) of the piezoelectric element (102) is arranged facing the first electrically conductive element (116) and spaced from the first electrically conductive element (116) by the first cavity (156);
- during the step d), the second electrically conductive element (118) is produced in and/or against a third substrate (154), then the third substrate (154) is fastened to the ends of the piezoelectric element (102) such that the second face (104) of the piezoelectric element (102) is arranged facing the second electrically conductive element (118) and spaced from the second electrically conductive element (118) by a second cavity (158) formed between the piezoelectric element (102) and the third substrate (154).

6. Method according to claim 5, wherein the first and second electrically conductive elements (116, 118) are electrically connected to one another by the intermediary of electrically conductive portions (160) made in the first, second and third substrates (101, 152, 154) and electrically connected together during the implementation of steps b) and d).

7. Method according to one of claims 5 or 6, wherein the fastenings of the ends of the piezoelectric element (102) to the second and third substrates (152, 154) are implemented at a temperature less than approximately 400°C by thermocompression or eutectic sealing or direct bonding or anodic bonding.

8. Method according to one of previous claims, wherein the making of at least one magnetic element (110, 112, 128) comprises, between the steps a) and b), the making of at least one first magnetic element (110) against the first face (106) of the piezoelectric element (102), and wherein:
- when the first electrically conductive element (116) is made against the first face (106) of the piezoelectric element (102), the first electrically conductive element (116) is arranged against the first magnetic element (110) such that the first magnetic element (110) is arranged between the first electrically conductive element (116) and the piezoelectric element (102), or
- when the first electrically conductive element (116) is produced in and/or against the second substrate (152), the first cavity (156) is arranged between the first magnetic element (110) and the first electrically conductive element (116).

9. Method according to one of previous claims, wherein the making of the at least one magnetic element (110, 112, 128) comprises, between the steps c) and d), the making of at least one second magnetic element (112) against the second face (104) of the piezoelectric element (102), and wherein:
- when the second electrically conductive element (118) is made against the second face (104) of the piezoelectric element (102), the second electrically conductive element (118) is arranged against the second magnetic element (112) such that the second magnetic element (112) is arranged between the second electrically conductive element (118) and the piezoelectric element (102), or
- when the second electrically conductive element (118) is made in and/or against the third substrate (154), the second cavity (158) is arranged between the second magnetic element (112) and the second electrically conductive element (118).

10. Method according to one of previous claims, further comprising, between the steps c) and d), the making of at least one electrically conductive via (126) such as at the end of the step d), the first and second electrically conductive elements (116, 118) are electrically connected to one another, by said at least one electrically conductive via (126), in series or in parallel or such that the first and second electrically conductive elements (116, 118) form at least one solenoid.

11. Method according to one of previous claims, wherein the making of the at least one magnetic element (110, 112, 128) comprises, between the steps c) and d), the making of at least one portion of magnetic material (128) such that at the end of the step d), the first and second electrically conductive elements (116, 118) are magnetically coupled to one another by said at least one portion of magnetic material (128).

12. Integrated magnetic device (100) with variable inductance, comprising at least:
- a substrate (122, 152);
- a piezoelectric element (102) comprising opposite first and second faces (104, 106), of which the ends are fastened to the substrate (122, 152) and of which the first face (106) is arranged on the side of the substrate (122, 152);
- a first cavity (124, 156) arranged between a portion of the substrate (122, 152) and the piezoelectric element (102);
- a first electrically conductive element (116) arranged on the side of the first face (106) of the piezoelectric element (102), and a second electrically conductive element (118) arranged on the side of the second face (104) of the piezoelectric element (102), the first and second electrically conductive elements (116, 118) being electrically and/or magnetically coupled to one another;
- a first magnetic element (110) arranged against the first face (106) of the piezoelectric element (102) and between the piezoelectric element (102) and the first electrically conductive element (116), and a second magnetic element (112) arranged against the second face (104) of the piezoelectric element (102) and between the piezoelectric element (102) and the second electrically conductive element (118).

13. Device (100) according to claim 12, wherein the first and/or the second electrically conductive element (116, 118) comprises an electrically conductive track forming meanders.

14. Device (100) according to one of claims 12 or 13, wherein the first electrically conductive element (116) is arranged at least partially against the first face (106) of the piezoelectric element (102) and in the first cavity (124), and wherein the second electrically conductive element (118) is arranged at least partially against the second face (104) of the piezoelectric element (102).

15. Device according to one of claims 12 or 13, wherein the first electrically conductive element (116) is arranged in and/or against the substrate (152) such that the first face (106) of the piezoelectric element (102) is arranged facing the first electrically conductive element (116) and spaced from the first electrically conductive element (116) by the first cavity (156), and wherein the second electrically conductive element (118) is arranged in and/or against another substrate (154) such that the second face (104) of the piezoelectric element (102) is arranged facing the second electrically conductive element (118) and spaced from the second electrically conductive element (118) by a second cavity (158) formed between the piezoelectric element (102) and a portion of said other substrate (154).

16. Device (100) according to one of claims 12 to 15, wherein each one of the first and second magnetic elements (110, 112) comprises a stack of at least one portion of ferromagnetic material and of at least one portion of antiferromagnetic material.

17. Device (100) according to one of claims 12 to 16, further comprising at least one electrically conductive via (126) electrically connecting the first and second electrically conductive elements (116, 118) to one another in series or in parallel or such that the first and second electrically conductive elements (116, 118) form at least one solenoid, and/or at least one portion of magnetic material (128) passing through the piezoelectric element (102) and magnetically coupling the first and second electrically conductive elements (116, 118) to one another.
